# EUROPEAN PATENT SPECIFICATION

(11) **EP 0 341 956 B1**
(45) Date of publication and mention of the grant of the patent: **02.11.1994**
(21) Application number: 89304631.8
(22) Date of filing: 08.05.1989
(51) Int. Cl.: C08F 222/02, C08F 220/64

(54) **Copolymer of resin acids and maleic anhydride**
Copolymer von Harzsäure und Maleinsäureanhydrid
Copolymère d'acides de résine et d'anhydride maléique

(30) Priority: 09.05.1988 US 191935
(43) Date of publication of application: 15.11.1989
(73) Proprietor: Union Camp Corporation, Wayne New Jersey 07470 - 2066 (US)
(72) Inventor: Parker, David W., Holland PA 18966 (US)
(74) Representative: Jones, Helen Marjorie Meredith

(56) References cited:
- US-A- 3 468 823
- CHEMICAL ABSTRACTS, vol. 109, no. 24, 12th December 1988, page 77, abstract no. 212517t, Columbus, Ohio, US; CN-A-86 103 183

## Description

### Background of the Invention

This invention relates to rosin containing polymers and more specifically, to the high-molecular weight copolymer which forms between resin acids present in rosin and maleic anhydride under the influence of a free radical initiator.

It has long been known that rosin can be reacted at high temperatures with maleic anhydride. The high temperatures promote Diels-Alder and Ene reactions between maleic anhydride and certain resin acids present in rosin. The reaction products ("rosin maleic anhydride adducts") result from the adduction of one maleic anhydride to one reactable rosin component and are thus of low molecular weight. This adduction chemistry has been described in detail by researchers at the United States Gypsum Company in Smith et al., "Products of the Reaction Between Rosins and Maleic Anhydride":, J. Paint Tech., May 1969.

Rosin and rosin maleic anhydride adducts are unsuitable for many commercial applications because they are of low molecular weight. A high molecular weight polymer formed from rosin would have a higher melting point and better film-forming properties than rosin or rosin adduct alone and would thus, if formulated into an ink or coating, impart increased hardness and thermal and UV stability. For this reason, considerable research activity has been directed toward making rosin-containing products of increased molecular weight and softening point.

The "polymerization" of rosin has previously been reported to occur by treatment of rosin with Lewis acids or strong Bronsted acids, such as sulfuric acid as disclosed in U.S. 2,107,366 issued to Morton. In fact, it is well known that the vast majority of the "polymer" which results from strong acid treatment of rosin consists of rosin dimer. The structure of one such dimer, formed by treatment of methyl levopimarate with p-toluenesulfonic acid, has been described by Gigante et al., J. Chem. Soc. Chem. Comm., 13:1038-9 (1986). Alternatively, rosin "polymers" have been reported to form upon heating rosin or rosin derivatives in the presence of a substance known to decompose under the heating conditions to form free radicals. But as disclosed by Breslow in U.S. 2,554,487 and U.S. 2,554,810, the "polymers" formed under these free-radical conditions are "chiefly dimeric".

The copolymerization of rosin with a reactive comonomer has heretofore proved as elusive as the homopolymerization of rosin. In U.S. 2,580,876, Arvin and Gitchel disclose that rosin may be reacted with styrene at high temperatures, with or without a free-radical initiator, to form "interpolymers". These "interpolymers" are ill-defined, and the extent to which rosin has actually copolymerized with styrene is far from clear. U.S. 2,311,781 to Scrutchfield discloses a composition described as a rosin-formaldehyde-maleic anhydride "conjoint condensate".

Another direction pursued by researchers desiring to make a high molecular weight rosin-containing polymer was to modify and/or derivatize rosin in ways which made rosin more amenable to a polymerization process. A common modification of rosin was "stabilization", the treatment of natural rosin so that it was hydrogenated and/or dehydrogenated. The derivatization of rosin frequently involved forming a reactive ester of rosin. An example of this general approach can be seen in the disclosures of Ropp in U.S. 2,727,872 and U.S. 2,727,873. Ropp prepared vinyl esters of stabilized rosin and copolymerized them with reactable vinyl compounds, including vinyl chloride and vinyl stearate, in the presence of a free-radical initiator. Another noteworthy example is U.S. 2,639,273 in which Gould discloses that the allyl ester of stabilized rosin, but not natural rosin, may be copolymerized with styrene or maleic anhydride in the presence of a free-radical initiator. Other examples of this general approach, including U.S. 3,401,154 are well known in the art.

Still another approach toward the goal of preparing high molecular weight rosin-containing polymers consists of reacting rosin with a preexisting polymer. As disclosed in U.S. 2,479,516 by Rust and Canfield, poly(allyl acetate) and rosin may be combined and heated to a temperature of 250°C with concomitant collection of acetic acid. These same authors, in U.S. 2,447,367, disclose that the ethylene glycol monoester of rosin can be transesterified with the preformed polymer formed by the homopolymerization of ethyl acrylate. Other examples of this general approach, including U.S. 3,997,487 are well known.

Copolymers obtained by the polymerization of the reaction product of rosin acid partial esters of a polyol with a polymerizable vinyl monomer, such as styrene or maleic anhydride, are disclosed in U.S. 3,401,154 issued to MacArthur.

A composition produced by condensing a monoalkanolamine with the reaction product of a terpene and, for example, an acid anhydride, is disclosed in U.S. 3,043,789 to Cyba. The terpene component may be a rosin.

Despite an apparent wealth of literature relating to the polymerization and copolymerization of rosin, the inventor is not aware of any prior art which describes the production of high molecular weight copolymers formed by the reaction of unmodified resin acids and maleic anhydride. The development of a simple and mild procedure for preparing high molecular weight rosin containing polymers would thus fulfil a long-felt need in the art.

### Summary of the Invention

Such high molecular weight copolymers have now been found. This invention therefore is directed to a product obtainable by free-radical-initiated copolymerization of the resin acids present in rosin, or esters of resin acids in which the olefinic arrangement has not been disrupted, with maleic anhydride, said polymer having a weight average molecular weight of at least about 1500. These copolymers exhibit properties that enable their use in various applications. This invention also relates to terpolymers comprised mainly of resin acids and maleic anhydride and to methods for preparing the polymers of this invention.

### Detailed Description of the Invention

The material of commerce known as rosin is a natural substance usually obtained from pine trees. It comprises largely structurally similar 6-20 monocarboxylic acids which are known as, and are referred to hereinafter as, resin acids. Rosin also frequently contains fatty acids, decarboxylated resin acids, and resin acid dimers and anhydrides. The composition of rosin will vary depending on the species of tree from which it is isolated, the location and season of the isolation, and the manner of isolation. For instance, gum rosin is the sap collected when a pine trunk is wounded, and tall oil rosin is a byproduct of the paper making process. Examples of the rosins which may be utilized to prepare the polymers of this invention include tall oil rosin, distilled tall oil rosin, gum rosin and wood rosin. A more complete description of the various components of rosin, as well as information about how rosin composition varies depending on when and where it is isolated, can be found in a report written by M.S. Bhatnagar in Paint India Feb 1982, pp. 4-19.

The structures of three of the resin acids typically present in rosin, referred to hereinafter as the "abietics", are as follows: 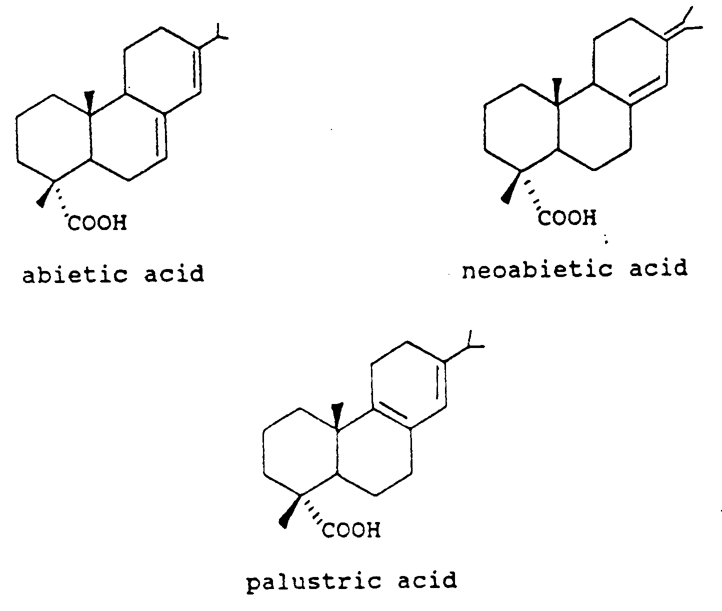
In preparing the copolymers of this invention, naturally occurring rosin, maleic anhydride, and an effective amount of at least one free-radical polymerization initiator are combined, preferably in the presence of suitable solvent. After mild heating for an appropriate length of time, the product mixture consists of product copolymer, unreacted rosin, and the adduct of rosin and maleic anhydride. Analysis of the residual unreacted rosin in the product mixture indicates that "abietics", the resin acids identified above, are no longer present. Although not intending to be bound by this theory, it is the inventor's belief that abietic acid and neoabietic acid undergo copolymerization with maleic anhydride, while the palustric acid reacts with maleic anhydride primarily to produce a 1:1 Diels-Alder adduct.

The copolymeric resin is believed to be a 1:1 resin acid:maleic anhydride polymer and to have the form of a linear polymer wherein the maleic anhydride and resin acid units repeat in an alternating arrangement, part of which can be illustrated, using two of the more important resin acids, as follows: 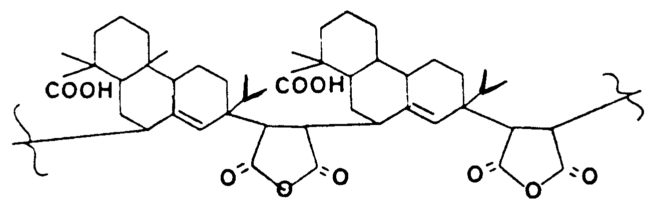
abietic acid - maleic anhydride units 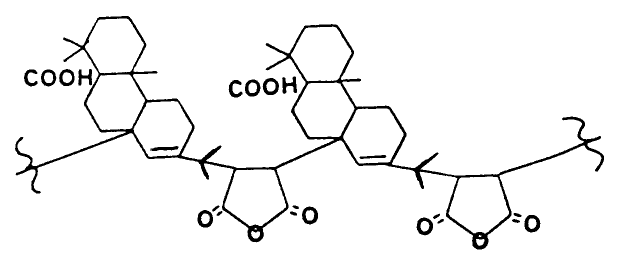
neoabietic acid - maleic anhydride units
In preparing the copolymers of this invention, the rosin may be used without prior modification. In other words, the resin acid is not stabilized, i.e., aromaticized or hydrogenated, to control or prevent its reaction in the polymerization process, and it is not activated, i.e., esterified with a reactive unsaturated alcohol, or adducted prior to copolymerization. In fact, since the olefinic bonds present in the abietics are believed crucial to the success of the copolymerization reaction, prior stabilization of rosin through aromatization or hydrogenation is judged detrimental. One can prepare copolymers of maleic anhydride and modified rosin if the modification does not disrupt the olefinic composition of the rosin. For example, unreactive esters and/or anhydrides of rosin carboxylate can be partially or completely substituted for natural rosin in the practice of this invention.

In general, the ratio of monomers utilized is not critical; however, it is convenient to employ a molar ratio of maleic anhydride to resin acids of between 1.0 and 2.0, preferably between 1.0 and 1.5.

The polymers of this invention can further comprise one or more additional monomers capable of polymerizing with maleic anhydride. Such additional monomers preferably comprise not more than about 50 mole% of the polymer, and the resulting polymers preferably comprise at least about 25 mole% resin acid(s) and at least about 25 mole% maleic anhydride. Monomers capable of polymerizing with maleic anhydride are well known in the art and include, for example, styrene, acrylonitrile, and acrylic acid as well as terpenes capable of reacting with maleic anhydride such as beta-pinene, beta-phellandrene and isoterpinolene.

The copolymers of this invention are prepared by contacting maleic anhydride and rosin in the presence of an effective amount of one or more free-radical initiators. The preferred initiator is 2,2'-azobis(2-methylpropanenitrile) (AIBN). Other suitable initiators include peroxides, e.g. benzoyl peroxide and dicumyl peroxide. Preferably, initiator concentration will be within the range of from about 0.01 to 2 weight percent, preferably about 0.1 to 1 weight percent, based on the total weight of rosin and maleic anhydride.

The temperature employed can be varied over a wide range. The most suitable temperature is largely fixed by the choice of the free-radical initiator. A reaction temperature such that the half-life of the initiator is approximately one hour is convenient, but higher or lower temperatures are acceptable. Ordinarily, the temperature will be between room temperature and 190°C, preferably between 40°C and 130°C, and more preferably between 60° to 80°C.

It is preferable to conduct the copolymerization in a solvent. A suitable solvent should dissolve the starting materials at the reaction temperature employed and also dissolve the product mixture. Preferred solvents include aromatic hydrocarbons such as toluene, aliphatic or aromatic esters such as ethyl acetate, and aliphatic ethers such as tetrahydrofuran.

As previously indicated, the product mixture obtained ordinarily consists of the copolymer formed between selected resin acids and maleic anhydride, unreacted resin acids and other rosin components, and adducts formed between maleic anhydride and selected resin acids. The properties of this product mixture depend upon the composition of the mixture, which in turn depends upon the source of the rosin and the reaction conditions employed. Product mixtures with ring-and-ball softening points above 115°C are easily obtained. The pure copolymer can be obtained by means known in the art (e.g., by distillation of the other components, or more easily, by precipitation of a toluene solution of the product mixture in methanol) and has a melting point range of 220-235°C.

Copolymers with a weight average molecular weight of at least about 1500, preferably in the range of at least about 3,000, as measured by gel permeation chromatrography with retention times referenced to polystyrene of known molecular weights, using a refractive index detector, may be prepared according to this invention.

The invention will now be described in connection with the following examples wherein part and percentages are by weight and temperatures are in degrees centigrade. The rosin used in examples 1-13 is a tall oil rosin and contains 27% abietic acid, 25.5% dehydroabietic acid, 7.3% palustric acid, 4.5% isopimaric acid, 2.3% neoabietic acid, 12% other resin acids, and 18.4% of dimers and other non-go thoughput. This rosin has an acid number of 166, a ring and ball softening point of 76°C, and is available commercially from Union Camp Corporation, as Unitol NCY.

### Example 1

A flask was charged with 75.5g Unitol NCY, 16.2g maleic anhydride and 64.0g toluene. This mixture was heated to 70°C while the rosin and maleic anhydride dissolved. With stirring 0.75g AIBN was added at once, and the solution was maintained at 70°C for 8 hours. The toluene and unreacted maleic anhydride were then distilled by gradual application of a 3 mm Hg vacuum and a temperature of 159°C. This resulted in 80.9g of product which, according to liquid chromatography (calibrated refractive index detector), contained 23% copolymer with a weight average molecular weight of 6,000 (relative to polystyrene). The remaining 77% consisted of unreacted rosin and rosin maleic anhydride adduct. This product mixture has a ring and ball softening point of 115°C, and a saponification number of 262.

### Example 2-4

To determine the extent to which the maleic anhydride to rosin ratio affects the copolymerization, three reactions were run as described in Example 1, with the following variation. Each starting material mixture consisted of 75g Unitol NCY rosin, 75g toluene, and 0.75g AIBN. The maleic anhydride loading was varied however, with loadings of 12g, 16g, and 20g in the three reactions. A reaction temperature of 70°C was used, and the reaction were monitored periodically by pulling samples and examining those samples by liquid chromatography. The results of this analysis are presented in Table 1. The rate of copolymer formation and the amount of copolymer formed after 28 hours was higher at the higher maleic anhydride (MA) loading.

**Table 1**

| Example | Amount MA | Amount Copolymer |
|---|---|---|
| 2 | 12g | 23.2% |
| 3 | 16g | 27.6% |
| 4 | 20g | 30.5% |

### Examples 5-7

To determine the influence of temperature, three reactions were run as described in Example 1, with the following variation. The starting material mixture in each case consisted of 75g Unitol NCY rosin, 16g maleic anhydride, 0.75g AIBN, and 75g toluene. The reaction temperature was varied, however, with temperatures of 60°C, 70°C, and 80°C being used. The results of this study are presented in Table 2. After 10 hours, a higher temperature resulted in a higher copolymer yield. However, after 20 hours of reaction, the reaction run at 70°C yielded more copolymer than the reaction run at 80°C.

**Table 2**

| Example No. | Temp. | 10 hr. Yield of Copolymer | 24 hr. Yield of Copolymer |
|---|---|---|---|
| 5 | 80°C | 27.1% | 27.7% |
| 6 | 70°C | 25.4% | 30.7% |
| 7 | 60°C | 14.9% | 24.9% |

### Examples 8-10

To determine the effect of initiator loading on the copolymerization, three reactions were run as described in Example 1, with the following variation. The starting material mixture in each case consisted of 75g Unitol NCY rosin, 16g maleic anhydride, and 75g toluene. A constant reaction temperature of 70°C was maintained, but the AIBN loading was varied, with loadings of 0.375g, 0.750 g, and 1.125g being employed. The results of this study are presented in Table 3. It is apparent that the amount of copolymer formed after 24 hours was greater when a higher loading of free radical initiator was used.

**Table 3**

| Example No. | Amount of AIBN | Copolymer Yield |
|---|---|---|
| 8 | 0.375g | 25.1% |
| 9 | 0.750g | 29.8% |
| 10 | 1.125g | 33.5% |

### Example 11-13

To determine the effect of dilution on the copolymerization, three reactions were run as described in Example 1, with the following variation. Each reaction was run at 70°C, and with starting material mixtures of 75g Unitol NCY rosin, 16g maleic anhydride, and 0.75g AIBN. The amount of toluene solvent was varied, however, with solvent masses of 50g, 75g and 100g being employed. The results of this study are presented in Table 4. It can be seen that dilution has a relatively small effect on the copolymerization, but that a larger amount of copolymer was formed after 24 hours when 50g rather that 100g of toluene were used.

**Table 4**

| Example No. | Amount of Solvent | Amount of Copolymer |
|---|---|---|
| 11 | 100g | 27.4% |
| 12 | 75g | 29.3% |
| 13 | 50g | 30.1% |

### Example 14

The apparatus described in Example 1 was assembled, and the flask charged with 36.38g NCY rosin, 16.47g maleic anhydride, and 64.36g toluene. The mixture was heated to 80°C and stirred to homogeneity. To the reactants 0.49g AIBN was then added at once, and 34.26g isoterpinolene of 95% purity was added through an additional funnel over a period of about one hour. This mixture was heated with stirring for twenty-one hours. An additional 0.50g AIBN was added every seven hours, and, after fourteen hours, an additional 7.5g maleic anhydride was added. The solvent and unreacted maleic anhydride and terpene were then removed by vacuum distillation. The product had a sap number of 288, Gardner color (40% in THF) of 10+, and a ring and ball softening point of 153°C. By liquid chromatography, the product was 60% by weight polymer, and that polymer had a weight average molecular weight of 6,900.

Following the teachings disclosed herein, it can be seen that high molecular weight copolymers can be prepared from rosin and maleic anhydride. These copolymers retain reactivity through the presence of carboxylic acid, succinic anhydride, and olefinic functionality. These sites of reactivity allow for ready modification of the polymer, e.g., alcohols may be added to the anhydride functionality to prepare mono (half) or di (full) esters. Other obvious modifications include esterification of the carboxylic acid group, cross-linking through the points of unsaturation, and amidization or imidization of the anhydride groups. Techniques to accomplish these transformations are well known.

The following uses are among those in which the polymers, product mixtures, and the derivatives thereof may be applied: adhesives, tackifiers, ink resins and components of coating compositions. Methods of employing polymers in the aforementioned uses are well known to those skilled in the art and are disclosed in the literature.

## Claims

1. A polymer obtainable by the copolymerization of the resin acids present in rosin, or esters of resin acids in which the olefinic arrangement has not been disrupted, and maleic anhydride, wherein the copolymerization reaction is initiated via a free-radical initiator, said polymer having a weight average molecular weight of at least 1500.

2. The polymer of claim 1 which is the product of the 1:1 copolymerization of the resin acids present in rosin, or said esters thereof, and maleic anhydride.

3. The polymer of claim 1 or claim 2 wherein the resin acids comprise abietics, preferably selected from abietic acid and neoabietic acid.

4. The polymer of any preceding claim having a weight average molecular weight of at least 3000.

5. The polymer of any preceding claim comprising repeating units selected from units illustrated in the formula

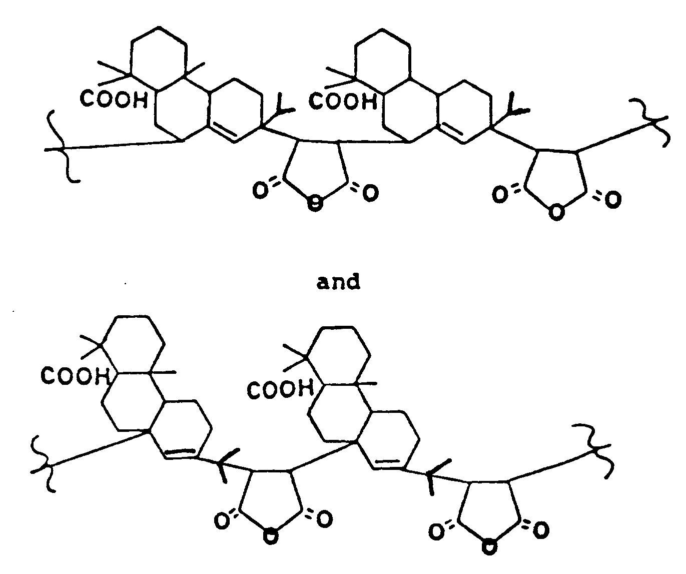

6. The polymer of any preceding claim in which the copolymerization includes also one or more additional monomers capable of polymerizing with maleic anhydride.

7. The polymer of claim 6 in which said one or more additional monomers comprise up to 50 mole % of the polymer, and are preferably selected from styrene, acrylonitrile, acrylic acid, beta-pinene, beta-phellandrene and isoterpinolene.

8. A process for preparing a polymer of any of claims 1 to 7 comprising copolymerizing approximately equimolar amounts of maleic anhdyride and one or more resin acids, or esters of resin acids in which the olefinic arrangement has not been disrupted, in the presence of an effective amount of at least one free-radical initiator.

9. The process of claim 8 wherein said free radical initiator is present in an amount of at least 0.01 weight percent, preferably in the range 0.01 to 1 weight percent, based on total weight of rosin and maleic anhydride.

10. The process of claim 8 or claim 9 wherein the free radical polymerization initiator is 2,2'-azobis(2-methylpropanenitrile).

11. The process of any of claims 8 to 10 wherein the rosin and maleic anhydride are contacted in the presence of a solvent, preferably selected from the group consisting of toluene, ethyl acetate and tetrahydrofuran.

12. The process of any of claims 8 to 11 wherein the rosin, maleic anhydride and free radical polymerization initiator are contacted at a temperature in the range of about 40° to 130°C.

13. The process of any of claims 8 to 12 where said rosin and said maleic anhydride are contacted in amounts such that the molar ratio of maleic anhydride to resin acids is in the range of 1.0 to 2.0, preferably in the range 1.0 to 1.5.

14. The process of any of claims 8 to 13 where said rosin is selected from the group consisting of tall oil rosin, gum rosin, distilled tall oil rosin and wood rosin.

15. The process of any of claims 8 to 14 where the product of said copolymerization is purified by removing unreacted rosin.

## Patentansprüche

1. Polymer, erhältlich durch Copolymerisation der in Kolophonium anwesenden Harzsäuren oder Ester von Harzsäuren, in welchen die olefinische Anordnung nicht zerstört wurde, und Maleinsäureanhydrid, worin die Copolymerisationsreaktion über einen Radikalinitiator initiiert wird, wobei das Polymer ein Gewichtsmittel des Molekulargewichts von mindestens 1500 aufweist.

2. Polymer nach Anspruch 1, welches das Produkt der 1:1 Copolymerisation der in Kolophonium anwesenden Harzsäuren oder der Ester davon und Maleinsäureanhydrid ist.

3. Polymer nach Anspruch 1 oder Anspruch 2, worin die Harzsäuren Abietine umfassen, vorzugsweise ausgewählt aus Abietinsäure und Neoabietinsäure.

4. Polymer nach irgendeinem vorhergehenden Anspruch, welches ein Gewichtsmittel des Molekulargewichts von mindestens 3000 aufweist.

5. Polymer nach irgendeinem vorhergehenden Anspruch umfassend Struktureinheiten, die ausgewählt sind aus Einheiten, dargestellt durch die Formel

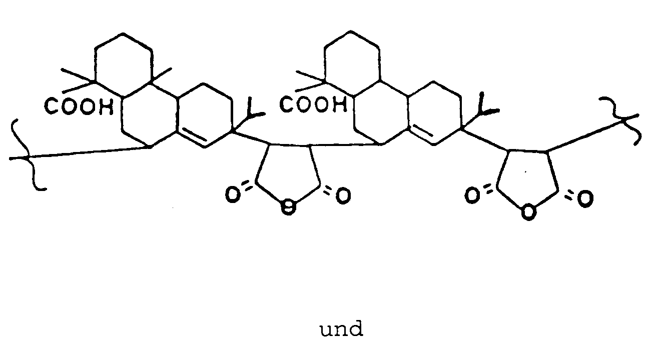

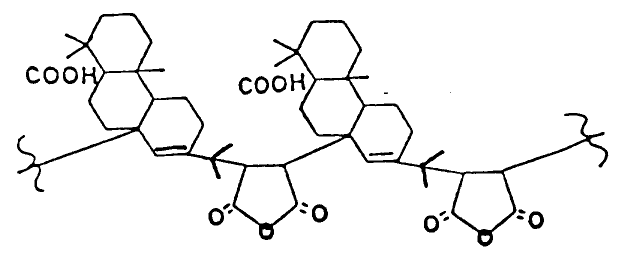

6. Polymer nach irgendeinem vorhergehenden Anspruch, bei welchem die Copolymerisation auch ein oder mehrere zusätzliche Monomere einschließt, die fähig sind, mit Maleinsäureanhydrid zu polymerisieren.

7. Polymer nach Anspruch 6, bei welchem das eine oder die mehreren zusätzlichen Monomeren bis zu 50 Mol-% des Polymers umfassen und vorzugsweise ausgewählt sind aus Styrol, Acrylnitril, Acrylsäure, β-Pinen, β-Phellandren und Isoterpinolen.

8. Verfahren zur Herstellung eines Polymers nach irgendeinem der Ansprüche 1 bis 7, umfassend die Copolymerisation von annähernd äquimolaren Mengen von Maleinsäureanhydrid und einer oder mehrerer Harzsäuren oder Ester von Harzsäuren, bei welchen die olefinische Anordnung nicht zerstört wurde, in Anwesenheit einer wirksamen Menge mindestens eines Radikalinitiators.

9. Verfahren nach Anspruch 8, worin der Radikalinitiator anwesend ist in einer Menge von mindestens 0,01 Gew.%, vorzugsweise im Bereich von 0,01 bis 1 Gew.%, basierend auf dem Gesamtgewicht von Kolophonium und Maleinsäureanhydrid.

10. Verfahren nach Anspruch 8 oder Anspruch 9, worin der Radikal-Polymerisationsinitiator 2,2'-Azobis(2-methylpropannitril) ist.

11. Verfahren nach irgendeinem der Ansprüche 8 bis 10, worin das Kolophonium und das Maleinsäureanhydrid in Anwesenheit eines Lösungsmittels, das vorzugsweise aus der aus Toluol, Ethylacetat und Tetrahydrofuran bestehenden Gruppe ausgewählt ist, in miteinander Kontakt gebracht werden.

12. Verfahren nach irgendeinem der Ansprüche 8 bis 11, worin das Kolophonium, das Maleinsäureanhydrid und der Radikal-Polymerisationsinitiator bei einer Temperatur im Bereich von etwa 40 bis 130°C in Kontakt gebracht werden.

13. Verfahren nach irgendeinem der Ansprüche 8 bis 12, wobei das Kolophonium und das Maleinsäureanhydrid in derartigen Mengen miteinander in Kontakt gebracht werden, daß das Molverhältnis von Maleinsäureanhydrid zu Harzsäuren im Bereich von 1,0 bis 2,0, vorzugsweise im Bereich von 1,0 bis 1,5 liegt.

14. Verfahren nach irgendeinem der Ansprüche 8 bis 13, wobei das Kolophonium ausgewählt ist aus der aus Tallölkolophonium, Balsamkolophonium, destilliertem Tallölkolophonium und Holzkolophonium bestehenden Gruppe.

15. Verfahren nach irgendeinem der Ansprüche 8 bis 14, wobei das Produkt der Copolymerisation durch Entfernen des nicht-umgesetzten Kolophoniums gereinigt wird.

## Revendications

1. Polymère pouvant être obtenu par la copolymérisation des acides résiniques présents dans la colophane, ou d'esters d'acides résiniques dans lesquels la structure ou l'agencement oléfinique n'a pas été rompu(e), et de l'anhydride maléique, la réaction de copolymérisation étant amorcée à l'aide d'un amorceur générateur de radicaux libres, ledit polymère ayant un poids moléculaire moyen en poids valant au moins 1500.

2. Polymère selon la revendication 1 qui est le produit de la copolymérisation à 1:1 des acides résiniques présents dans la colophane, ou des diesters de ces acides, et de l'anhydride maléique.

3. Polymère selon la revendication 1 ou la revendication 2, dans lequel les acides résiniques comprennent des abiétiques, choisis de préférence parmi l'acide abiétique et l'acide néoabiétique.

4. Polymère selon l'une quelconque des revendications précédentes, ayant un poids moléculaire moyen en poids valant au moins 3000.

5. Polymère selon l'une quelconque de revendications précédentes, comprenant des motifs répétés choisis parmi les motifs représentés dans les formules

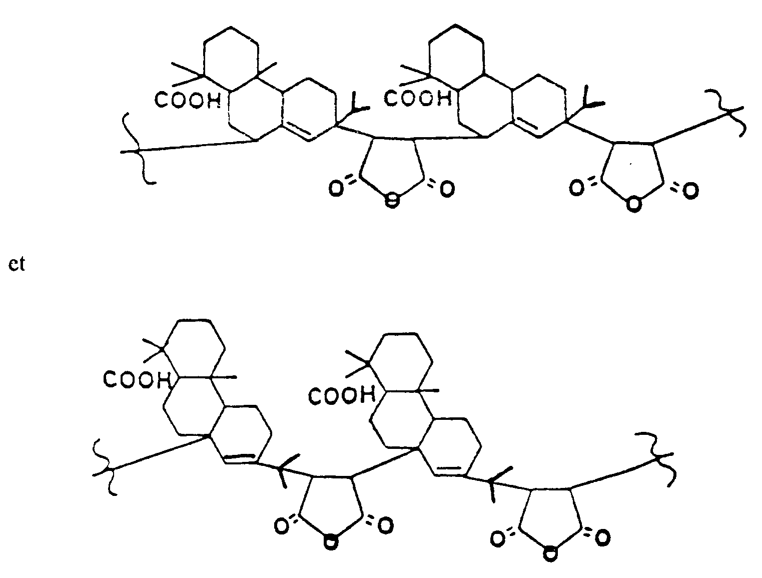

6. Polymère selon l'une quelconque des revendications précédentes, dans lequel la copolymérisation comprend également un ou plusieurs monomères supplémentaires capables de copolymériser avec l'anhydride maléique.

7. Polymère selon la revendication 6, dans lequel le(s) dit(s) un ou plusieurs monomère(s) supplémentaire(s) représente(nt) jusqu'à 50 mol % du polymère, et est ou sont choisi(s) de préférence parmi le styrène, l'acrylonitrile, l'acide acrylique, le bêta-pinène, le bêta-phéllandrène et l'isoterpinolène.

8. Procédé pour préparer un polymère selon l'une quelconque des revendications 1 à 7, comprenant la copolymérisation de quantités approximativement équimolaires de l'anhydride maléique et d'un ou plusieurs acides résiniques, ou d'esters d'acides résiniques dans lesquels les dispositions ou agencements oléfiniques n'ont pas été rompus, en présence d'une quantité efficace d'au moins un amorceur générateur de radicaux libres.

9. Procédé selon la revendication 8, dans lequel ledit amorceur générateur de radicaux libres est présent en une quantité d'au moins 0,01 % en poids, de préférence en une quantité comprise entre 0,01 et 1 % en poids, sur la base du poids total de la colophane et de l'anhydride maléique.

10. Procédé selon la revendication 8 ou la revendication 9, dans lequel l'amorceur de polymérisation générateur de radicaux libres est le 2,2'-azobis(2-méthylpropanenitrile).

11. Procédé selon l'une quelconque des revendications 8 à 10, dans lequel on met la colophane et l'anhydride maléique en contact en opérant en présence d'un solvant, choisi de préférence dans l'ensemble consistant en le toluène, l'acétate d'éthyle et le tétrahydrofuranne.

12. Procédé selon l'une quelconque des revendications 8 à 11, dans lequel on met la colophane, l'anhydride maléique et l'amorceur de polymérisation générateur de radicaux libres en contact à une température comprise entre environ 40° et 130°C.

13. Procédé selon l'une quelconque des revendications 8 à 12, dans lequel on met ladite colophane et ledit anhydride maléique en contact en des quantités telles que le rapport molaire de l'anhydride maléique aux acides résinique entre 1,0 et 2,0, de préférence entre 1,0 et 1,5.

14. Procédé selon l'une quelconque des revendications 8 à 13, dans lequel ladite colophane est choisie dans l'ensemble consistant en de la colophane de tall oil, de la colophane gomme, de la colophane de tall oil distillée et de la colophane de bois.

15. Procédé selon l'une quelconque des revendications 8 à 14, dans lequel le produit de ladite copolymérisation est purifié par enlèvement de la colophane n'ayant pas réagi.
